# EUROPEAN PATENT APPLICATION

(11) **EP 4 005 717 A1**
(43) Date of publication of application: **01.06.2022**
(21) Application number: 20020567.2
(22) Date of filing: 27.11.2020
(51) Int. Cl.: B23H 7/20, B23H 9/00, G05B 19/4093, B23H 1/00

(54) **METHOD AND DEVICE FOR ELECTRICAL DISCHARGE MACHINING**

(71) Applicant: GF Machining Solutions AG, 1217 Meyrin (CH)
(72) Inventor: Chapatte, Christian, 1213 Petit Lancy (CH); Akten, Olcay, 1020 Renens (CH); Perez, Roberto, 1208 Genève (CH)
(74) Representative: Fenner, Seraina

(57) **Abstract**

A method for generating cavity model (28) applied for machining a part by electrode discharge machine (EDM) using a tool electrode comprising:
a. generating a part-before EDM model (23) defining the geometry of a part to be eroded by the EDM machine to obtain a final part;
b. generating an electrode model (10) defining the geometry of the electrode applied for eroding the part;
c. computing a cavity model (28) defining the geometrical shape of a cavity, which represents the volume of the material to be eroded by the erode based on the part-before EDM model (23) and the electrode model (10).

## Description

### FIELD OF THE INVENTION

The present invention is directed to a method for generating a cavity model, in particular a cavity model in the format of the computer-aided design applied for electrical discharge machining.

### BACKGROUND OF THE INVENTION

Electrical discharge machining (EDM) process is a well-known process to machine complex shapes on a part by using a tool electrode to obtain a final part having the designed shape. A raw part is mounted on a machine table of the machine tool and the tool electrode is mounted above the raw part with a defined distance to the workpiece. The goal of EDM process is to remove material existing on the part, in order to achieve the final geometry of the final part. To achieve this result, the electrode is moving according to a certain trajectory, and electrical voltage is applied in between the electrode and the part. All along the trajectory, voltage is generating electrical discharges, which are removing the material from the part, to get the expected final surface finish and the shape of the final part.

An important parameter to prepare an EDM machining job is the geometrical description of the cavity shape to be machined, which is specified by a so-called cavity model. Normally, a cavity model defining the geometrical shape of the cavity is generated during the initial phase of EDM machining job generation. If the cavity model does not correspond to the real cavity shape, the EDM job is not optimized and the final part cannot be produced in an efficient and accurate way.

In further, the selection of settings of machining parameters depend on the cavity model, since the cavity model defines the volume of the material to be eroded by the EDM machine.

Today, the modeling of the cavity shape to generate the cavity model is based on the shape of the electrode, e.g. from a generated electrode model or the designer must create it manually, which could be a time consuming task depending on the complexity of the cavity to be machined. If the electrode model is used, the cavity shape is considered as the 3-dimensional model of the electrode cut from the bottom up at a given height, defined as the machining depth. In some cases, frequently, the cavity model, determined based on the electrode model and the machining depth, does not correspond to the real shape of the cavity. For these frequent cases, the designer is forced to use a more complex modelling methodology to define properly the cavity model.

### SUMMARY OF THE INVENTION

It is an objective of this invention to provide a method to generate a cavity model applied for the electrical discharge machining and the cavity model needs to be accurate to reflect properly the cavity shape to erode. In addition, it is an objective of this invention to provide a method to generate the cavity model in an automated way.

According to the present invention, these objectives are achieved through the features of the independent claims. In addition, further advantageous embodiments follow from the dependent claims and the description.

In the present invention, a method for generating the cavity model applied for machining a workpiece by electrical discharge machine (EDM) using a tool electrode comprises generating a part-before EDM model, an electrode model and computing a cavity model defining the geometrical shape of a cavity based on the part-before EDM model and the electrode model.

The part-before EDM model defines the geometry of a part to be eroded by the EDM machine to obtain a final part. The part can be a pre-machined part or a raw part and the geometry of the part is defined by the part before EDM model. The electrode model defines the geometry of the electrode applied to erode the part. The cavity model defines the volume of the material to be eroded and the geometry of the material to be removed by-the EDM process.

The electrode model representing the tool electrode geometry can be generated for example using a computer-aided design program (CAD) or imported into the CAD tool. In particular, the cavity model is calculated by conducting Boolean calculation in between the electrode model and the part-before EDM model. In particular, the part-before EDM model is a CAD model, or a model in other format. Preferably, the electrode model is a CAD model. Since the calculation functions are provided in the most of tools, in particular in CAD tools, the cavity model can be derived in a simple way.

In order to fulfill the requirements for different machine producers, the cavity model data can be exported into different file formats for example, Step, Parasolid, Native SolidWorks format, IGES.

In a preferred variant, the part before EDM is a raw part, which is not machined by a machining process, and the corresponding part-before EDM model is a raw part mode.

In another preferred variant, the part before EDM is an intermediate part, which is pre-machined and the corresponding part-before EDM model is an intermediate-part model. The pre-machining can be milling, EDM, laser or any other machining types. For instance, a substantial part of the cavity material is removed by means of milling, but the final cavity cannot be obtained by milling because of the cavity details, aspect ratio, excessive wear of a cutting tool, and other reasons. The intermediate part model defines the geometrical shape of the pre-machined part, namely intermediate part. The intermediate-part model can be obtained from a CAD tool directly and/or from a simulation tool. Advantageously, the intermediate-part model is extracted from a Computer-aided manufacturing tool (CAM), for example extracting 3D mesh model from milling operation simulation. CAM exports e.g. stl file, which can be imported into a CAD tool, e.g. SolidWorks. The stl file can be automatically converted to a file, which can be used for calculation. For example, stl file can be converted to a mesh file.

In some embodiments, the intermediate part is obtained by eroding a raw part by an EDM machine. In particular, the raw part is first eroded by a first electrode to obtain an intermediate part and the intermediate part is further eroded by one or more additional electrode. In this variant, the EDM process is supposed to engage, one by one, different electrodes to achieve step by step the final geometry. In that case, the method needs to consider the sequence of machining to define the correct cavity model for each particular electrode. We call sequence of machining the sequence to engage electrodes from the first electrode to use up to the last electrode. For each particular possible sequence, the method defines a particular cavity CAD Model for each particular electrode.

In a variant, the method comprises generating a first part-before EDM model defining the geometry of a raw part to be eroded by the EDM machine to obtain an intermediate part, generating a first electrode model defining the geometry of the first electrode applied for the eroding the raw part, and computing a first cavity model defining the geometry of the material to be removed from the raw part by the first electrode to obtain the intermediate part based on the first part-before EDM model and the first electrode model. In further, the method comprises generating a second part-before EDM model defining the geometry of the intermediate part, generating a second electrode model defining the geometry of a second electrode applied for the eroding the intermediate part, and computing a second cavity model defining the geometry of the material to be removed from intermediate part by eroding using the second electrode.

The first cavity model is calculated by using the first electrode model and the first part-before EDM model describing the geometry of the raw part, which is to be eroded by the first electrode. Then a second part-before EDM model is generated by conducting the Boolean calculation between the first cavity model and the first part-before EDM model.

In a second step, the Boolean calculation between the second part-before EDM model and a second electrode model is conducted to obtain the second cavity model.

In the present invention, a method for machining a part by an EDM machine tool comprises the following steps: receiving the cavity model generated; determining the machining parameters based on the cavity model; and machining the part using the received cavity model and the determined machining parameters.

In the present invention, an electrical discharge machine comprises a machine table on which a part is mounted and a tool holder for holding an electrode applied to machine the part, and a controller configured to receive the cavity model generated. It is also possible that the electrode model and the part-before EDM model are directly input into the controller and the calculating the cavity model is also conducted by the controller.

Preferably, the controller is further configured to determine a plurality of machining parameters based on received cavity model. Since the cavity model generated by using the method of the present invention provide a high accuracy, the machining parameters calculated based on the precise cavity model are optimized. This leads to an improved quality of the machined part and the production sufficiency.

### Brief Description of the Drawings

In order to describe the manner in which advantages and features of the disclosure can be obtained, in the following a more particular description of the principles briefly described above will be rendered by reference to specific embodiments thereof, which are illustrated in the appended drawings. These drawings depict only exemplary embodiments of the disclosure and are not therefore to be considered limiting of its scope. The principles of the disclosure are described and explained with additional specificity and detail through the use of the accompanying drawings in which:
- Fig. 1: illustrates a comparison of the prior art and the present invention;
- Fig.2a: illustrates the prior art;
- Fig. 2b: illustrates one example of the invention; and
- Fig. 3: illustrates another example of the invention.

### EXEMPLARY EMBODIMENTS

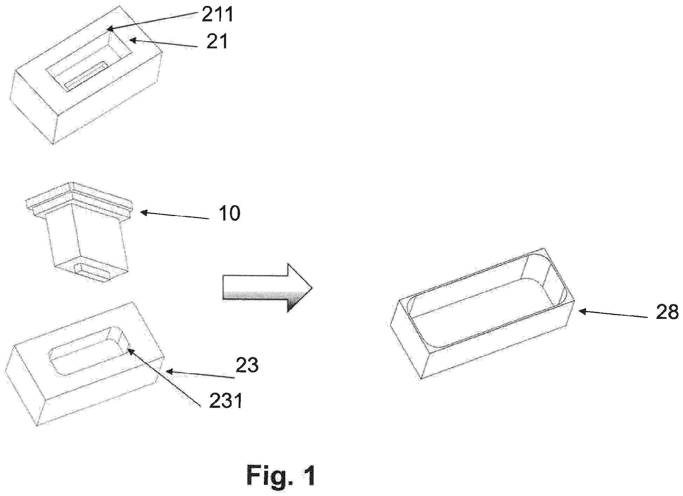

Figure 1 illustrates a comparison of the model used in the prior art and the present invention. The workpiece model 21 is a model of a final part. This model does not include all the deviations of the geometry due to limited machining accuracy if the part is pre-machined. For example, the corners 211 are modeled as a perfect rectangle. In the reality, such perfect rectangle cannot be achieved if for example the part is pre-machined by milling process, as the diameter of the cutting tool will cause rounding in the corner. If this model is combined with an electrode model 10 to calculate the cavity model, the error in the corner will appear in the cavity model and consequently causes wrong interpretation of the cavity shape and therefore, this will lead to a non-optimized EDM job and the final part cannot be produced efficiently and accurately.

On the contrary, the part-before-EDM model 23 is derived from the real machining, e.g. from the CAM system, therefore, all the geometry deviations such as the corners 231 due to machining inaccuracy are considered by generating the model. If this model is combined with an electrode model 10 to calculate the cavity model 28, the rounded corner will appear in the cavity model and consequently improve the accuracy of the final part machined by EDM based on the cavity model. It is common to simulate the toolpath and the material removing for the milling process, thus, this information can be input into the process of generating the cavity model directly from the simulation tool of the milling process. A 3-dimensional mesh model of the pre-machined workpiece can be extracted from the CAM system after the milling operation simulation and used as the part before EDM model. The cavity model is computed by combining the electrode model and the part before EDM model. The Boolean operation can be conducted to calculate the cavity model based on the part-before EDM model and the electrode model.

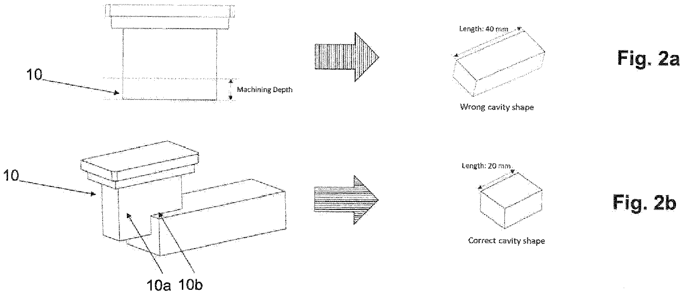

Figures 2a and 2b illustrate an example, in which a portion of the electrode shape is engaged in the machining. As shown in figure 2b, the left portion of the electrode 10a should not be engaged with the workpiece during EDM machining. If the cavity model is generated only based on the electrode model, the cavity model will include this left portion as shown in figure 2a, which does not correspond to the real cavity shape. When the machining parameters are selected based on this inaccurate cavity model, inappropriate machining parameters will be chosen. The computed power setting will be unnecessary high to machine the cavity, which therefore, will increase the electrode wear. This can lead to poor final part accuracy. If several cavities with same shape has to be machined, it is usual that one electrode is used to machine several shapes. However, due to increased electrode wear, the electrode has to be replaced earlier which will increase the number of needed electrodes and therefore, the cost of production will also increase. In further, the machining time will increase due to additional material to be removed by the finishing pass, which was left by the roughing operation due to the electrode wear. As the power setting for the finishing pass is low, the removal of the additional material will increase significantly the machining time. If the part-before-EDM model is used, the generated cavity model as shown in figure 2b complies with the real geometrical shape of the cavity, thus the drawbacks can be overcome.

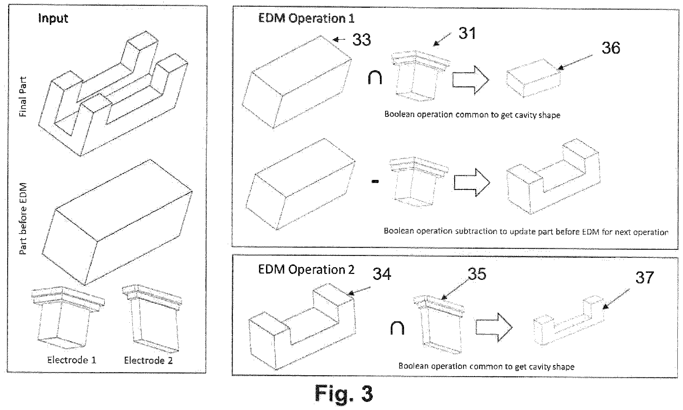

Figure 3 shows a further example, in which the final part is achieved by machining a workpiece with two different electrodes. The EDM machining includes two operations. In the first operation, a first electrode is mounted to the machine to erode the raw workpiece to produce an intermediate part. In the second operation, a second electrode is mounted to the machine to erode the intermediate part to obtain the final part. For preparing the first EDM operation, a model of the raw part as a first part-before EDM model 33 and a model of the first electrode 31 are provided and a Boolean operation is conducted to calculate a first cavity model 36. For preparing the second EDM operation, a model of the intermediate part as a second part-before EDM 34 and a model of a second electrode 35 are provided and a Boolean operation is conducted to calculate a second cavity model 37. The second part-before EDM model is an intermediate part model, which is in this embodiment obtained by applying the first part-before EDM model and the first electrode model, in particular by conducting a Boolean calculation there between.

### LIST OF REFERENCES

- 10: electrode model
- 21: workpiece model
- 211: corner of workpiece model
- 22: raw part model
- 23: part-before EDM model
- 231: corner of part-before EDM model
- 28: cavity model
- 29: final part
- 31: first electrode
- 32: second electrode
- 33: first part-before EDM model
- 34: second part-before EDM model
- 36: first cavity model
- 37: second cavity model
- 38: final part

## Claims

1. A method for generating a cavity model applied for machining a part by electrode discharge machine (EDM) using a tool electrode comprising:
a. generating a part-before EDM model defining the geometry of the part, which is to be eroded by the EDM machine to obtain a final part;
b. generating an electrode model defining the geometry of the tool electrode applied for eroding the part; and
c. determining the cavity model defining the geometrical shape of a cavity, which represent the volume of the material to be eroded by the tool electrode, based on the generated part-before EDM model and the generated electrode model.

2. The method according to claim 1, wherein the part-before EDM model is a computer aided design (CAD) model.

3. The method according to claim 1 or 2, wherein the part-before EDM model and the electrode model are input into a Computer-aided design (CAD) tool, in particular, the cavity model is calculated by conducting Boolean calculation between the part-before EDM model and the electrode model.

4. The method according to one of claims 1 to 3, wherein the part-before EDM model defines the geometry of a raw part.

5. The method according to one of claims 1 to 4, wherein the part-before EDM model defines the geometry of an intermediate part, which is obtained by machining the raw part.

6. The method according to claim 5, wherein the raw part is machined by one of the following machining processes to generate the intermediate part: milling, electro-discharge machining, laser machining, cutting, and grinding.

7. The method according to one of claims 1 to 6, wherein the method further comprises:
a. generating a first part-before EDM model defining the geometry of the raw part to be eroded by the EDM machine to obtain the intermediate part;
b. generating a first electrode model defining the geometry of a first electrode applied for the eroding the raw part;
c. computing a first cavity model defining the volume of the material to be removed from the raw part to obtain the intermediate part;
d. generating a second part-before EDM model defining the geometry of the intermediate part;
e. generating a second electrode model defining the geometry of a second electrode applied for the eroding the intermediate part;
f. computing a second cavity model defining the geometry of the material to be removed from the intermediate part by eroding using the second electrode by conducting Boolean operation between the second part-before EDM model and the second electrode model

8. The method according to one of previous claims, wherein the part-before EDM model is extracted from a Computer-aided manufacturing (CAM) tool.

9. The method according to one of previous claims, wherein the part-before EDM model is extracted from a mesh file.

10. A method for machining a part by an EDM machine tool comprising:
receiving the cavity model generated according to one of claims 1 to 9;
determining the machining parameters based on the cavity model; and
machining the part using the received cavity model and the determined machining parameters.

11. An electrical discharge machine comprising a machine table on which a part is mounted and a tool holder for holding an electrode applied to machine the part, and a controller configured to receive the cavity model generated by using the method according to one of the claims 1 to 9.

12. The electrical discharge machine according to claim 11, wherein the controller is further configured to determine a plurality of machining parameters based on received cavity model.
